Europäisches Patentamt

European Patent Office

Office européen des brevets

(11) Publication number: **0 231 629**
A2

# EUROPEAN PATENT APPLICATION

(21) Application number: 86309745.7

(22) Date of filing: 15.12.86

(51) Int. Cl.³: **G 02 F 1/29**
G 02 F 1/05, G 02 F 1/03

(30) Priority: 18.01.86 GB 8601189

(43) Date of publication of application:
12.08.87 Bulletin 87/33

(84) Designated Contracting States:
AT BE CH DE FR IT LI NL SE

(71) Applicant: STC PLC
10, Maltravers Street
London, WC2R 3HA(GB)

(72) Inventor: Andreassen, Jon
1, Rowney Cottages
London Road Sawbridgeworth Hertfordshire(GB)

(74) Representative: Dennis, Mark Charles et al,
STC Patent Department Edinburgh Way
Harlow Essex CM20 2SH(GB)

(54) Optical switching.

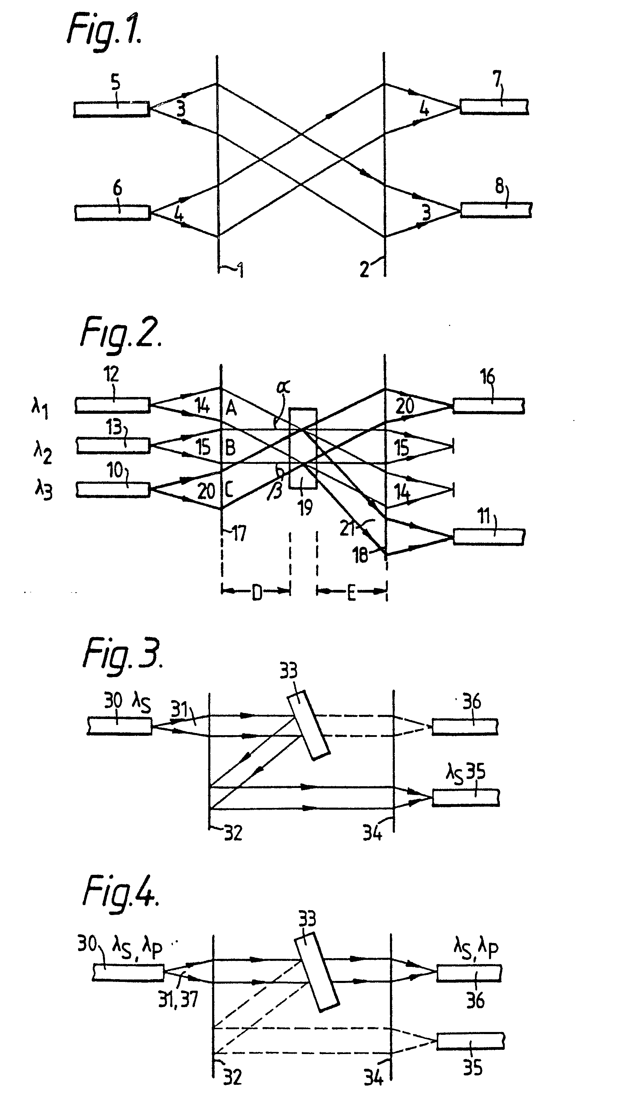

(57) Optical signals are switched by control optical signals. In one arrangement (Figure 2) a proportion of an optical signal (20) output from a fibre (10) is deflected and coupled to one fibre (11) rather than being coupled to another fibre (16). This deflection is achieved if both of two control signal beams (14,15) are/were present to generate a refractive index grating in a photorefractive material (19). In another arrangement (Figures 3 and 4) the transmittance of a Fabry Perot etalon (33), at which the optical beam ($\lambda_s$ 31) is directed, is controlled by the presence/absence of a pump signal ($\lambda_p$ 37). Holograms on holographic plates (17,18:32,34) serve to affect (deflect, focus, collimate or reflect) the optical beams as appropriate. The holographic plates and photorefractive material (or etalon) are preferably rigidly disposed in a light-proof container with suitable input and output means for the optical signals.

Croydon Printing Company Ltd.

OPTICAL SWITCHING

This invention relates to optical switching and in particular to the switching of optical signals between optical paths.

According to one aspect of the present invention there is provided a method of switching one or more optical signals (20) between different optical paths, characterised in that the path adopted (20,21) is determined by one or more optical control signals (14,15), which control signals serve to affect transmission through an optical element (19) of the optical signal (20) or signals to be deflected, and including the use of holographic elements (17,18) serving to direct the optical signal (20) or signals to be switched and the one or more optical control signals (14,15) along appropriate optical paths.

According to another aspect of the present invention there is provided an apparatus for switching one or more optical signals (20) between different optical paths (20,21) characterised by means (17,18,19) whereby the path adopted is determined by one or more optical control signals (14,15), said means including an optical element (19), the transmission of the optical signal or signals to be switched through the optical element (19) being affected by the one or more optical control signals, and comprising holographic elements (17,18) serving to direct the optical signal or signals to be switched and the one or more control signals along appropriate optical paths.

Embodiments of the invention will now be described with reference to the accompanying drawings, in which:-

Fig. 1 illustrates optical beam deflection by means of two holograms;

Fig. 2 illustrates optical beam switching according to one embodiment of the present invention, and

Figs. 3 and 4 illustrates optical beam switching according to another embodiment of the present invention.

It is known that holograms can be used to affect (deflect, focus etc.) optical signals. Fig. 1 illustrates the use of two holographic plates 1 and 2 to interchange optical beams 3 and 4 output from the ends of two optical fibres 5 and 6. Into fibre 7 which is illustrated as "uppermost" in the arrangement of fibres 7 and 8 there is launched the output beam from fibre 6 which is illustrated as "lowermost" in the arrangement of fibres 5 and 6. Whereas into fibre 8, which is "lowermost", there is launched the output beam from fibre 5, which is "uppermost". Each holographic plate contains two spaced apart holograms (one "above" the other as seen in the drawing), one for each beam to be operated on. The holograms of plate 1 serve to deflect and collimate whereas these of plate 2 serve to deflect and focus.

The present invention is, however, concerned with the switching of optical signals by means of optical signals. An embodiment which achieves this and employs two holographic plates and a photorefractive material is illustrated in Fig. 2. The arrangement is such that part of a "signal" beam 20 output from a fibre 10 is deflected into a fibre 11 but only under certain circumstances, as will be apparent from the following, otherwise fibre 11 "sees" no radiation from beam 20. Thus the arrangement operates as an on/off switch for fibre 11. The arrangement further includes a photorefractive material 19, two fibres 12 and 13 for "control" optical beams 14 and 15, a fibre 16 into which signal beam 20 is launched when not deflected by photorefractive material 19, and two holographic plates 17 and 18. For the illustrated operation, holographic plate 17 requires three separate holograms (one "above" the other); one for affecting (deflecting and collimating) the control beam 14, one for affecting (collimating) the control beam 15 and one for affecting (deflecting and collimating) the signal beam 20. The holographic plate 18 requires one hologram to focus the deflected part 21 of the collimated signal beam onto the end face of fibre 11 and one hologram to focus the remaining collimated signal beam onto the end face of fibre 16. In addition holographic plate 18 has, for the illustrated operation, two holograms for focussing the "control" beams after their passage through the material 19 onto the end faces of respective fibres (not shown), which control beams have interchanged as described with reference to Fig. 1. The "control" beams may be directed by these non-illustrated fibres to other similarly constructed optical switches to control their operation.

When both of the "control" beams 14 and 15 as deflected by holographic plate 17 are incident on the photorefractive material 19 at a high enough intensity and at an appropriate angle, then part 21 of the signal beam 20, which is usually of a lower intensity than the "control" beams, will be deflected and focussed on fibre 11. When only one of the "control" beams 14 and 15 is, or neither of the "control" beams 14 and 15 are, present then beam 20 will not be deflected and will pass through the arrangement and be launched/focussed into fibre 16.

This effect is achieved by the "control" beams 14 and 15, which may have a higher intensity than the "signal" beam 20, forming an interference pattern in the region of their intersection, which is in the photorefractive material 19 and induces refractive index variations in the photorefractive crystal 19. The thus formed refractive index grating then deflects part 21 of the signal beam 20 at an angle determined by the angles of incidence of the "control" beams 14 and 15 on the crystal 19 and their wavelengths. The "control" beams 14 and 15 may be of the same wavelength as one another, although this is not necessary, and do not necessarily have to have the same wavelength as the "signal" beam 20. Since the refractive index grating will not be formed when neither or only one control beam is present, the "signal" beam 20 will not be deflected under these circumstances. Thus the arrangement as seen by fibre 11 operates as an AND gate, that is fibre 11 will only have an optical beam to transmit when control beams 14 and 15 are both present. Only a small part of the signal beam will be so deflected. The efficiency of deflection may be improved if a voltage is applied to photorefractive material, for example up to 10kV, although an effect is achievable without such a voltage, which means that this type of switching of light by light can be achieved even in optical systems where electrical signals are not permitted, such as for EMP immune systems. Typically the photorefractive crystal is comprised of $Bi_{12}SiO_{20}$ or $Bi_{12}GeO_{20}$. With a $Bi_{12}SiO_{20}$ crystal and a 6kV applied voltage, 3% of the signal beam will be deflected into fibre 11. The efficiency of the deflection process in the photorefractive material depends on the thickness of the material, in particular the applied voltage/cm is important, and thick materials have higher efficiency but limit the possible deflection angles. The arrangement will operate in the visible range if the photorefractive material is $Bi_{12}SiO_{20}$ or $Bi_{12}GeO_{20}$. Alternatively, it will operate in the infra-red radiation range (0.8µm to 1.8µm) if the photorefractive material is Fe doped InP or Cr doped GaAs.

The relative positions of the fibres 10,11,12,13 and 16 depends on the wavelengths $\lambda_1$, $\lambda_2$, $\lambda_3$, the angle $\alpha$ between the control beams, the angle $\beta$, and the distances D and E. The beams A,B,C are not necessarily collimated beams, they may be focussed down although they are usually collimated. Typically for the visible range the control beams are green and the signal beam is red. Whereas the deflection of one signal beam is discussed above, more than one signal beam may be simultaneously deflected by an arrangement based on that shown in Fig. 2. Any or all of the fibres 10,12,13 may be replaced by point sources of light, and either or both of the fibres 11 and 16 may be replaced by photodetectors. The fibres may be monomode or multimode. If fibres are employed at the input end to produce beams 14,15 and 20, they are preferably monomode fibre whereby to act as point sources. The output fibres which capture beams 20 and 21 may be multimode. The hologram 18 is not required to "focus" as such when there is a wide fibre aperture for capturing radiation.

The photorefractive material is preferably only as long as is required to perform the required deflection, length being measured transverse to distances D and E but in the plane of the drawing. If the material is too long, stray light may produce noise, only some 80% of a beam being deflected by a hologram. Since the photorefractive material has to absorb optical power in order to create the required interference pattern (grating) the control beams must be of wavelength(s) relevant to the photorefractive material. However the crystal should preferably not absorb the signal beam significantly and thus the signal beam must also be of a wavelength relevant to the photorefractive material. Absorption of the signal beam will cause a grating induced in the crystal to be degraded or cleared. If the control beam wavelengths are different to the signal beam wavelengths, one can "set up" a grating in the photorefractive material, switch off the control beams and when a subsequent signal beam arrives it will be deflected and not cause the grating to be cleared. Otherwise the control beams may need to be switched on at all times. Since a hologram works best at the wavelength at which it was made, three different exposures will be needed to create hologram plate 17, for example, and four will be required for plate 18.

For efficient operation the holograms and photorefractive material of Fig. 2 will need to be disposed within a light-proof container and rigidly mounted therein. At the light input and output faces of the container, means for accurately locating the fibres/point sources and fibres/detectors will be required. Alignment is critical, particular at the output where the signal beam is deflected. Input/output fibres may be permanently coupled to the faces of the container. The input fibres may have their cladding stripped from their ends and be immersed in an index matching liquid. Since removing the cladding means that the fibres are mechanically weakened at their ends, some form of clamping collar will be required. As mentioned before the relative positions of the fibres depends on the control and signal beam wavelengths. The hologram-photorefractive material-hologram arrangement may be made more compact if suitable custom-made holograms are employed. Using a large area photorefractive material many such systems as described above may be incorporated in a single container either one above the other or side by side in an nxm array.

The switching of optical signals by optical signals and involving the use of two holograms may also be achieved with a non-linear Fabry Perot etalon. Fig. 3 illustrates such an arrangement in one switching state and Fig. 4 illustrates the arrangement in another switching state. In Fig. 3 a signal beam 31 of wavelength $\lambda_s$ is directed from a fibre 30 onto a first ("upper") hologram, of a holographic plate 32, which serves to affect (collimate) the signal beam which is then incident on a Fabry Perot etalon 33 with an optically non-linear medium, for example of InSb or GaAs.

Initially the signal beam 31 of wavelength $\lambda_s$ is substantially reflected by the etalon 33 since the conditions of transmittance are not met. A second ("lower") hologram on plate 32 serves to reflect the beam reflected by etalon 33 and direct it towards a holographic plate 34, a "lower" hologram of which focusses the beam onto the "lower" fibre 35. Some light will however be launched into the "upper" fibre 36 due to the finite but very low transmittance of the etalon outside of resonance and an "upper" hologram of plate 34 which focusses the transmitted beam onto the fibre 36.

On sending an additional and more intense optical beam 37 of wavelength $\lambda_p$ ("pump" beam) through fibre 30 together with the signal beam 31, which is to be switched to fibre 36 instead of fibre 35, the etalon will be brought into resonance and transmit the intense beam of wavelength $\lambda_p$ together with the signal of wavelength $\lambda_s$ into fibre 36, if the signal wavelength $\lambda_s$ is the same as the pump wavelength $\lambda_p$, or if $\lambda_s$ is within the critically wavelength dependent transmission/resonance window of the etalon, or if $\lambda_s$ is at a separate wavelength which however also reaches resonance as the refractive index of the non-linear medium within the etalon is altered as a result of the pump signal. Thus in Fig. 4 the signal beam and pump beam at wavelengths $\lambda_s$ and $\lambda_p$ are substantially transmitted to fibre 36, a small proportion will however be reflected at the etalon and launched into fibre 35. Thus the addition of a pump signal beam causes switching of a signal beam from one optical path (in fibre 35) to another optical path (in fibre 36). The "lower" hologram of plate 32 which acts as a mirror may be replaced by a mirror. The elements of the Figs. 3 and 4 embodiment may likewise be placed in a light-proof container.

Both of the above described switches employ holographic elements in the switching of optical signals between optical fibre elements and are compact structures compared with lenses, prisms etc and involve no moving parts compared to mechanical switches. The signal beam is caused to be switched by control radiation, the control beams of the Fig. 2 embodiment or the pump signal of the Figs. 3 and 4 embodiment. Whereas the optical signal is described as switched between optical fibre paths it is not to be considered so limited, other optical paths may be substituted for the optical fibres, or, as mentioned, detectors may be used. The hologram plates may be made in dichromated gelatin using green or blue laser light. The efficiency of such holograms is theoretically 100%. By using special recording techniques such holograms can be made to operate in the near infra-red (0.8 to 1.55µm) efficiently and without aberrations.

CLAIMS:-

1.      A method of switching one or more optical signals (20) between different optical paths, characterised in that the path adopted (20,21) is determined by one or more optical control signals (14,15), which control signals serve to affect transmission through an optical element (19) of the optical signal (20) or signals to be deflected, and including the use of holographic elements (17,18) serving to direct the optical signal (20) or signals to be switched and the one or more optical control signals (14,15) along appropriate optical paths.

2.      A method as claimed in claim 1, characterised in that the optical element (19) is a photorefractive material and wherein when two optical control signals (14,15) are appropriately incident on the photorefractive material a refractive index grating is generated therein, which grating serves to deflect the optical signal or signals to be switched.

3.      A method as claimed in claim 1, characterised in that the optical element is a Fabry Perot etalon (33) with an optically non-linear medium and wherein an optical control signal (37) comprising a pump signal with appropriate characteristics is incident on the etalon (33) together with a signal (31) to be switched the latter signal is directed to an optical path different to that to which it is directed in the absence of the pump signal.

4.      A method as claimed in any one of the preceding claims and for use in coupling an optical signal transmitted in a first input optical fibre (12) to either a first or a second output optical fibre (16,11).

5.      An apparatus for switching one or more optical signals (20) between different optical paths (20,21) characterised by means (17,18,19) whereby the path adopted is determined by one or more optical control signals (14,15), said means including an optical element (19), the transmission of the optical signal or signals to be switched through the optical element (19) being affected by the one or more optical control signals, and comprising holographic elements (17,18) serving to direct the optical signal or signals to be switched and the one or more control signals along appropriate optical paths.

6.      Apparatus as claimed in claim 5, characterised in that the optical element is a photorefractive material (19) and wherein in use when two optical control signals (14,15) are appropriately incident on the photorefractive material a refractive index grating is generated therein which serves to deflect the optical signal (20) or signals to be switched.

7.      Apparatus as claimed in claim 5, characterised in that the optical element is a Fabry Perot etalon (33) with an optically non-linear medium and wherein in use when a pump signal (37) with appropriate characteristics and comprising said at least one control signal is incident on the etalon (33) together with an optical signal (31) to be switched the latter signal is directed to an optical path different to that to which it is directed in the absence of the pump signal.

8.      Apparatus as claimed in any one of claims 5 to 7 characterised by at least one input optical fibre (10) and at least two output optical fibres (16,17), the apparatus serving to couple an optical signal transmitted in the input optical fibre to either of the two output optical fibres.

9.      Apparatus as claimed in claim 6 characterised by optical point sources for generating the one or more control signals.

10.      Apparatus as claimed in claim 9 characterised by optical point sources for generating the one or more optical signals to be switched.

11.      Apparatus as claimed in any one of claims 6, 9 or 10 characterised by detector means to detect the switched one or more optical signals.

Fig.1.

Fig.2.

Fig.3.

Fig.4.